# EUROPEAN PATENT SPECIFICATION

(11) **EP 3 493 725 B1**
(45) Date of publication and mention of the grant of the patent: **03.06.2020**
(21) Application number: 17758630.2
(22) Date of filing: 01.08.2017
(51) Int. Cl.: A47J 37/07

(54) **MODULAR GRILL WITH INTEGRATED BRAZIER-OVEN**
MODULARER GRILL MIT INTEGRIERTEM KOHLENPFANNENOFEN
GRIL MODULAIRE À FOUR BRASERO INTÉGRÉ

(30) Priority: 03.08.2016 IT 201600081618
(43) Date of publication of application: 12.06.2019
(73) Proprietor: R.D. Metalvetro di Romeo Domenici, 00018 Palombara Sabina (RM) (IT)
(72) Inventor: Domenici, Romeo, I-00018 Palombara Sabina (RM) (IT)
(74) Representative: Fiammenghi, Eva
(86) International application number: PCT/IB2017/054700
(87) International publication number: WO 2018/025179

(56) References cited:
- FR-A1- 2 582 925
- FR-A1- 2 980 094
- US-A- 2 600 234

## Description

### Field of the art

The present invention regards outdoor and garden furnishing as well as grill kitchen. In particular, the present invention regards a new and innovative type of grill for cooking various types of foods that can be used as an outdoor oven for baking/cooking bread, pizza, roasted meat, boiling water, etc.

### Prior art

The grill is an instrument used for cooking meat and fish especially as well as some types of vegetables. It commonly consists of a steel grid, constituted by horizontal bars that mutually cross with the vertical ones. It can be a square, rectangular or even circular-shaped element. Though the grill was used for the first time by the Achaeans in Ancient Greece approximately in the 9^{th} century B.C., some finds were discovered in the Kingdom of Egypt too. From the Achaeans henceforth, the grill rapidly expanded and developed changing to make the cooking of dishes faster and more efficient.

Today, cooking on a grill is commonly referred to as "barbecue" written similarly in almost all languages. It is argued that this expression derives from the name of the grill used by central American tribes, the Caribbean tribes in particular. When the Spanish conquerors returned to Europe after invading those areas, they imported this new word indicating the grill cooking method. Right from 1733, the word was used to indicate an open air social gathering dedicated to meat grilling.

Today, the barbecue has become rather trendy and even though the grill and its accessories have been subject to some changes and development to make this activity more and more accessible to all over the years, grill cooking has remained basically intact for centuries and across the globe. Besides the condiments and the cooking methods, a modern grill will be more or less the same whether in Brazil, China or any other country. Regardless of the geographical location of the barbecue, it will always be in the open air given the amount of smoke and sparks generated during the cooking and that confer the dishes the smoky after-taste that people love so much.

The possibility to transport, the ease of igniting fire and safety are the characteristics most required by a modern user planning to use a grill for cooking meat.

The grill has been subject to several international patents aimed at improving the performance and accessibility thereof. For example, the recently filed United States patent n° US 2016 183725 shows how from the primordial cookery, today the grill has become a socialisation instrument to be exploited with all kinds of possible comforts. This patent claims a foldable barbecue, that can be folded and transported in a trolley-like fashion complete with a cooling device where it can be put away after use. When the grill is removed from the transportation casing and assembled, the casing serves as a food warmer and it is also provided with a TV, speakers and a source of power supply for the chargeable battery. In light of the products available in the market, there doesn't seem to be any modular grill that enables the user to select and relatively easily change the size of the barbecue depending on the number of guests. As a matter of fact, even though grills come in various shapes and sizes, upon purchasing the grill of the format deemed most suitable for the needs thereof, one cannot have a bigger or smaller one without having to buy another one.

A modular grill is known from FR-A-2582925.

Thus, an object of the present invention is to provide a modular grill in which the user can choose the best configuration of the object whenever needed.

A further criticality of all grills consists in the fact that the residual heat of the embers cannot be utilised once through with cooking the meat. As a matter of fact, a further objective of the present invention is to provide an element that serves as an oven which enables exploiting the heat of the embers to prepare other dishes such as bread, pizza, boiling water, etc., without requiring any supervision and thus without disturbing the users already engaged in the preparation of the meal.

Furthermore, the present invention also efficiently overcomes the problem related to safety by reducing the amount of sparks generated, avoiding the rusting of the metal components that form the grill.

### Description of the invention

The present invention regards a new and innovative type of grill 100 with various advantages with respect to common grills or barbecues known up to date. The grill 100 of the present invention, in particular, is the of the modular and multi-accessorised type with the aim of making barbecue preparation not only an easy and non-demanding task but also a tasty one given that the taste of the grilled product does not only depend on the meat or other food products to be cooked alone but also the cooking method.

The base structure 101 of the grill 100 in question is rectangular or square-shaped, with at least four uprights 102 arranged at the corners and at least four crosspieces 103 that horizontally connect said uprights 102 and confer the required stiffness to the structure. Like common to many outdoor grills, at least the two rear uprights 102 are provided with wheels 104 and at least the two front uprights 101 are provided with handles 105. Thus, even one user can single-handedly easily transport the entirety like a wheelbarrow without excessive effort.

A lower support plane 131 on which the dishes, condiments, instruments required to prepare the grill, cutlery, glasses and anything else can be placed, can be advantageously installed between the crosspieces 103. Laterally, said base structure 101 can be advantageously provided with at least one pair of brackets 400-400' tool holder and/or with at least one pair of lateral boards 600-600'. The latter, in particular, are preferably connected to the base structure 101 through a common rotatable mechanism provided with a horizontal stop point. On the other hand, the upper part of the base structure 101 is suitable to serve as a cooktop 106.

Advantageously, said cooktop 106 is constituted by a horizontal flat surface made up of a metal sheet of a plurality of metal profiles 107 suitable to hold a plurality of rectangular bricks 108 made of refractory material. As a matter of fact, it is known that cooking on refractory material confers the food-stuffs an absolutely unique and particular smoky after-taste that will be advantageously obtained in the grill 100 of the present invention, without any effort at all. Alternatively, it is also possible that the cooktop 106 be provided with only one brick, with dimensions equivalent to the dimensions of the cooktop 106, which will constitute the refractory material on which the dishes will be cooked.

Another advantage obtained from the particular structure of the cooktop 106, lies in the fact that the metal profiles are configured so as to enable the simple introduction of the bricks 108 without requiring other holding means and without requiring any masonry works. Said metal profiles 107 will preferably be C-shaped but this does not exclude other possible embodiments. This enables attaining two advantages: the first lies in the ease of assembly and disassembly of the entire grill 100 or any damaged bricks 108; the second lies in the fact that there is no element made of different material that can alter the taste of the food-stuffs prepared on the grill.

Advantageously, said cooktop 106 is also characterised by at least two lateral surfaces or raised edges, still obtained using the same technique as the bricks 108 held by metal profiles 107, which are suitable to be reversibly engaged with at least one mobile grill 109 at a distance from the cooktop comprised between 5 cm and 30 cm, preferably 10 cm. The grill 100 will also preferably be provided with at least one spit or a roasting-jack, to be hanged over the embers in a manner identical to the movable grills 109 mentioned above.

Said movable grills 109 will preferably be more than one, at least two, to enable the simultaneous cooking of different food-stuffs without the flavours mixing. In addition, in order to enable easy serving, each movable grill 109 is provided with at least one pair of handles 500-500'.

Said grill 100, is advantageously also constituted by an element suitable to serve as a brazier-oven 110. The latter is constituted by a substantially cube or parallelepiped-shaped structure arranged at the rear portion of the cooktop 106. Just like the previously described cooktop 106, it is also characterised by lateral surfaces constituted by a plurality of metal profiles 111 suitable to be reversibly engaged with a plurality of rectangular bricks 112 made of any refractory material. Said bricks 112 will preferably but not exclusively be of the same format as the bricks 108 described previously regarding the cooktop 106, so that the user cannot mistake the positioning of the bricks 108, 112 when assembling and subsequently disassembling the entire grill 100. The advantage offered by the choice of the materials mentioned above lies in the fact that the grill 100 of the present invention resists outdoors without rusting, like it instead occurs in grills currently available in the market. Furthermore, another particularly advantageous embodiment of the present invention lies in the fact that the safety offered by the grill 100 in question is much higher with respect to any other similar device. As a matter of fact, said grill 100 advantageously reduces the sparks generated and the sparks close to the user in particular.

The lower surface of said brazier-oven 110, is advantageously constituted by a fixed grill 113 while the upper surface can be reversibly closed using a common lid 116 provided with a handle 117.

In the preferred application, the user arranges the wood and ignites the fire in the fixed grill 113 and the embers starts to fall on the cooktop 106 after a few minutes, and thus the grill cooking may begin. Thus, the ignition of the embers occurs in the brazier-oven element 110, thus limiting the dispersal of sparks and ash. In addition, after igniting the fire a movable grill 109 can be advantageously be provided instead of the lid 116 of the brazier-oven 110. It will thus be sterilised and disinfected by the action of the underlying fire.

More particularly, said brazier-oven 110 is also advantageously suitable to contain at least one internal tray 114, preferably two, reversibly removable and each provided with a respective handle 115.

The advantage offered by the brazier-oven 110 lies in the fact that, once through with the grill cooking, the user can exploit the cooktop 106 and all its component surfaces to arrange additional food (such as pizza, bread, chicken, roast meat, or water to be boiled) on said internal trays 114, accumulate the embers once again at the lower surface of the brazier-oven 110, and wait for the food to cook while seated to enjoy the grilled food just prepared for example. To this end, it is preferable that the material constituting said lid 116 be ceramic glass so as to resist against the high temperatures and, simultaneously, enable to visually monitor the cooking of the food without opening the lid 116. In a variant embodiment of the brazier-oven 110, a thermometer is also provided arranged on the front surface of said brazier-oven 110 so as to enable monitoring the cooking temperature.

Another advantage of said brazier-oven 110 lies in the fact that it is reversibly connected to said cooktop 106, so that it can be easily removed if not required for use. This characteristic is also useful in cases where a user already has a cooktop and deems it convenient to buy the brazier-oven element 110 alone separately.

In an aspect of the present invention, the brazier-oven element 110 may also constitute a coating wall for any surface exposed to flames or embers, such as the internal surface of a chimney for example. As a matter of fact, its lateral surfaces are constituted by an assembly or welding of several metal profiles 111 (preferably but not exclusively C-shaped) and the interposed refractory bricks 112, can be provided, at the corners, with special hinges 121 which enable the opening of the brazier-oven 110 and the transformation thereof from a three-dimensional to a substantially two-dimensional structure suitable for covering surfaces as mentioned.

In a further aspect of the present invention, the user may also advantageously be placed in a condition to choose the dimensions of the grill 100 thereof with the brazier-oven 110 integrated. In this embodiment, said crosspieces 103 and the metal sheet or metal profiles that support the cooktop 106, are of the telescopic type so as to enable the extension of said cooktop 106 in at least one direction. In addition, also the metal profiles 111 of said brazier-oven 110 are reversibly engaged with each other by means of a common fitting system or by means of common mechanical means such as screws, pins or the like, in a manner such that by adding further metal profiles 111, provided with the same reversible coupling system, or by removing some metal profiles 111, the user can reversibly modify at least one dimension of said brazier-oven 110.

In a further aspect of the present invention, the cooktop 106 with the base structure 101 and the brazier-oven element 110 can be made in mutually irreversibly and firmly fixed manner. Several optional accessories with the overall purpose of making the barbecue comfortable, easy and quick to prepare are provided in the present invention. To this end, advantageously, the components of the grill 100 in question may also include an accessory plane 118 suitable to be reversibly engaged with at least one raised lateral surface of said cooktop 106 projecting externally and also being constituted by at least one pair of metal profiles 107 suitable to be reversibly engaged with at least one brick 108 and being suitable to enable the stable support of utensils, condiments or other.

In order to move from the cooking mode using the grill 109 to the cooking mode using the brazier-oven 110, instead of transferring all the embers using a special hand instrument, said grill 100 can advantageously be provided with a slidable plane 130 that reversibly moves horizontally on the cooktop 106 to transfer all the embers to the lower part of the brazier-oven 110. A further object of this slidable plane 130 is to avoid the dispersal of ash during and after the cooking. It can also be reversibly removable from the grill 100 so as to facilitate the cooktop 106 cleaning operations.

In addition, at least one lateral surface of the brazier-oven 110 can advantageously be provided with at least one closing element 120 which slides vertically and reversibly along a direction of the arrow 200 to hold said embers at the lower part of the brazier-oven 110.

In a version of the grill 100 in subject of the invention, food cooking can be facilitated by one or both of the following accessory components: an electric cooking plate and/or gas stove, supplied by a common gas cylinder 129, suitable to ignite the fire.

Providing said grill 100 with a common electrical plug 124, possibly provided with a cable winder, would also enable obtaining the lit version of the present invention in which a rotatable structure 122 is advantageously rotatably reversibly connected at least to the two rear uprights 102 of said base structure 101 by means of a pair of hinges 126. In detail, said rotatable structure 122 may shift from a first configuration in which the two vertical rods it is made up of are at contact with the two rear uprights 102, to a second configuration in which - rotating around said hinges 126 - it reaches a vertical stop point in which the two vertical rods it is made up of are arranged along the same directrix as said rear uprights 102. The power supply, through said plug 124, feeds at least one light 123, arranged on the horizontal rod that said rotatable structure 122 is made up of, so as to light up automatically when said rotatable structure 122 takes said second configuration. Possibly, said at least one light 123 may alternatively be power-supplied by a battery.

Another optional additional component of the grill 100 subject of the invention may advantageously be a thermal-insulation container 128, preferably arranged on said lower support plane 131, suitable to maintain the dishes and/or beverages at the right temperature. A wood-holder drawer may also be provided.

All these components are aimed at obtaining maximum usability of the grill 100 as well as versatility and transportability thereof. Thanks to the ease with which each component can be disassembled, extended, shortened, replaced, and reassembled, the grill 100 of the present invention is not only particularly suitable when moving out or simply transferring from one place to another but it also guarantees optimal cooking thanks to the refractory bricks that cover almost all surfaces thereof.

### Description of the figures

The invention will be described hereinafter in at least one preferred embodiment, provided by way of non-limiting example, with reference to the attached figures, wherein:

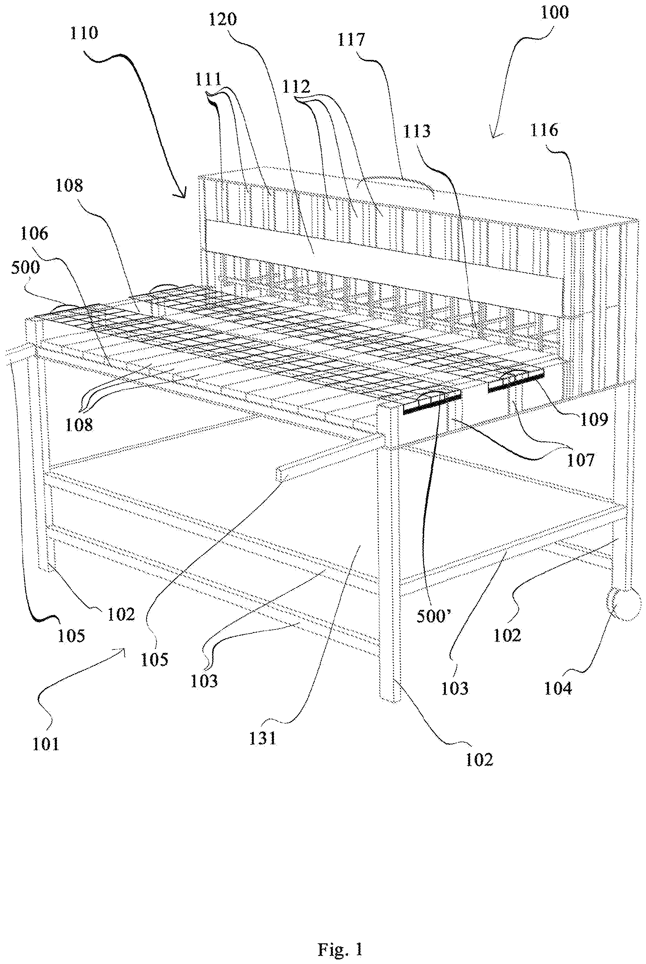

- FIGURE 1 shows a three-dimensional view of the whole grill 100 showing the base structure 101 with the four uprights 102 and connection crosspieces 103. Also shown is one of the two wheels 104 and the two handles 105, the cooktop 106 constituted by bricks 108 held by the metal profiles 107, the lower support plane 101 and the two movable grills 109 with the relative handles 500-500'. Also shown is the brazier-oven 110 constituted by the lid 116 with the handle 117, the bricks 112 held by the metal profiles 111, the fixed grill 113 and the closing element 120.

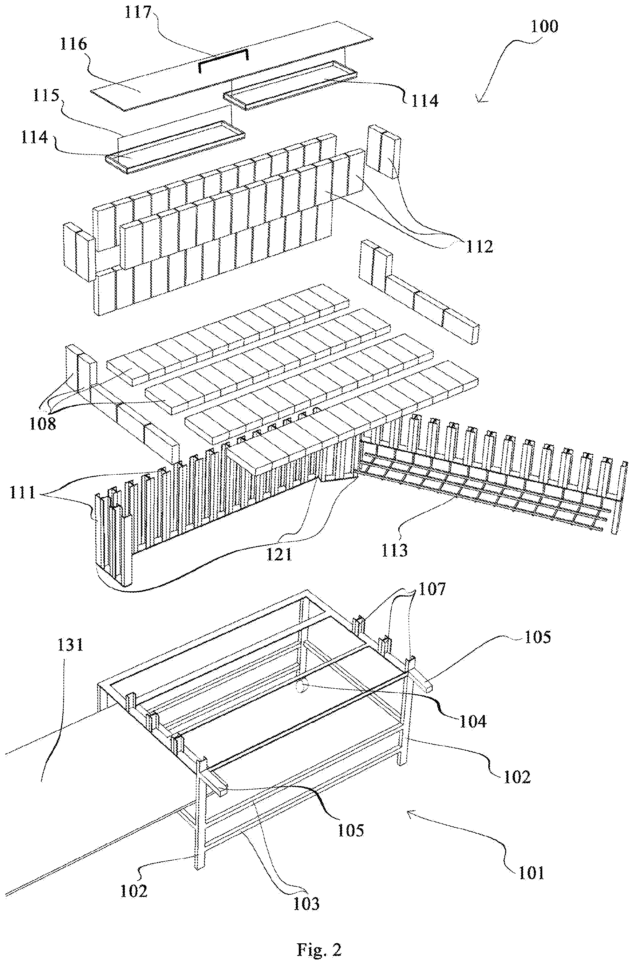

- FIGURE 2 illustrates an exploded view of the grill 100 subject of the invention showing, from top to bottom: the lid 116 of the brazier-oven 110 with the relative handle 117, two internal trays 114 with the relative handles 115, the bricks 112 of the brazier-oven 110 and, beneath the structure constituted by the C-shaped metal profiles 111 coupled and welded to form a substantially H-shape (the structure is shown open due to the presence of hinges 121) and by the fixed grill 113, the base structure 101 constituted by uprights 102, crosspieces 103, wheels 104, handles 105, metal profiles 107 for the bricks (108 not represented) and the lower support plane 131.

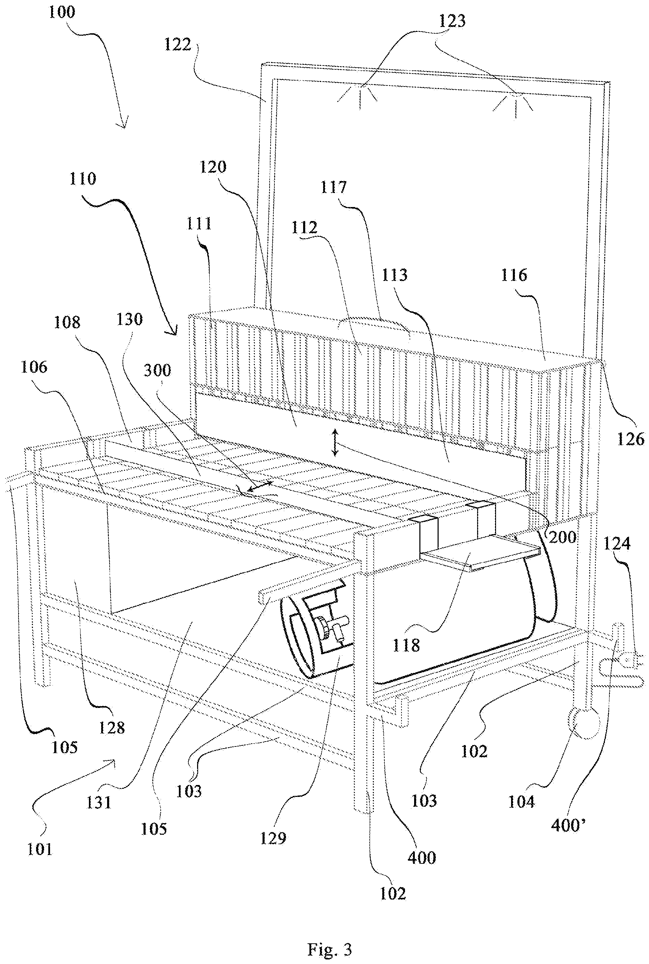

- FIGURE 3 shows a three-dimensional view of a multi-accessorised version of the grill 100 of the present invention. In this embodiment, besides the components illustrated in FIGS. 1 and 2, also shown are the lateral accessory plane 118, the slidable plane 130 which moves along the direction indicated by the arrow 300, the closing element 120 which moves along the direction indicated by the arrow 200, the electrical plug 124 which supplies the lights 123 installed on the rotatable structure 122 connected to the base structure 101 through the hinges 126, on the lower support plane 131; also shown are the gas cylinder 129, the insulation container 128 and, laterally, a pair of tool holder brackets 400-400'.

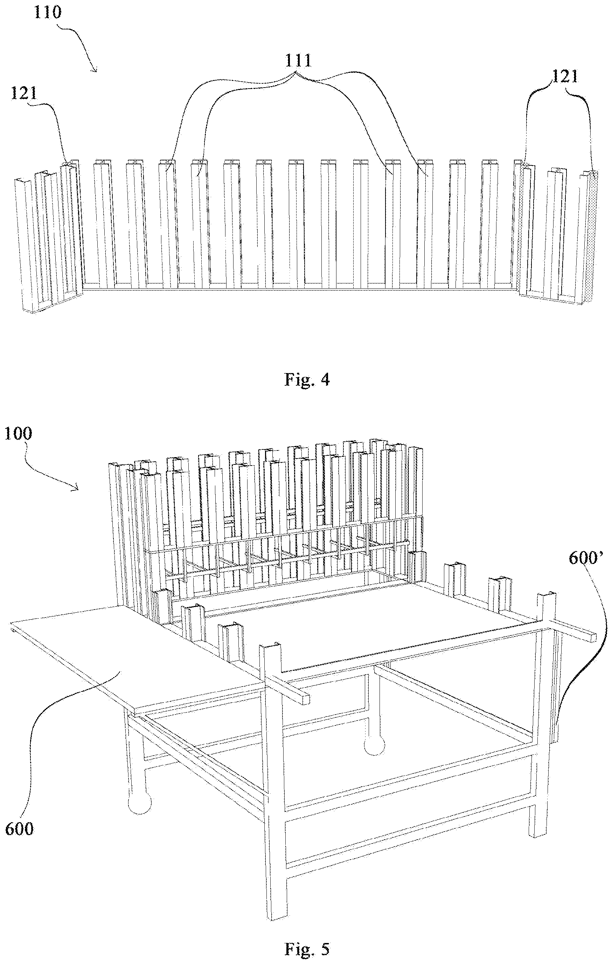

- FIGURE 4 shows a more detailed view of the brazier-oven element 110 disassembled and open thanks to the special hinges 121 (which are highlighted in grey) to cover any wall exposed to open flames such as for example the inner wall of a chimney.
- FIGURE 5 illustrates a version of the grill 100 subject of the invention provided, besides the previously mentioned components, also with a pair of lateral boards 600-600' laterally rotatably connected to the base structure, up to a horizontal stop point.

### Detailed description of the invention

Now, the present invention will be illustrated purely by way of non-limiting example, with reference to the figures illustrating some embodiments regarding the present inventive concept.

With reference to Fig. 1, shown is a perspective three-dimensional view of the grill 100 subject of the invention. It can be observed that the base structure 101 is a square or rectangular-shaped trilithon-like metal structure made up of four uprights 102 arranged at the corners of the base rectangle horizontally connected by crosspieces 103. The particular embodiment of FIG. 1 is provided with a lower support plane 131 which is supported by said crosspieces 103 and which is particularly comfortable for placing anything required for barbecue preparation ritual. In addition, the illustrated embodiment laterally features a pair of brackets 400-400' used as tool-holders. More in detail, in a more accessorised version, like the one illustrated in FIG. 3, said lower support plane 131 is partly occupied by a thermal-insulation container 128, in which the dishes to be prepared or beverages to be kept cold can be comfortably placed, and a gas cylinder 129 suitable for supplying a stove which will facilitate igniting the embers.

Back to the base structure 101, the uprights 102 will be provided with at least one pair of juxtaposed wheels 104 and at least one pair of handles 105, through which the user can single-handedly lift the front part of the grill 100 and easily transport it exploiting the action of the wheels 104. A pair 600-600' lateral boards, one to the right and one to the left of the base structure 101 can be provided for laterally. As represented in FIG. 5, said lateral boards 600-600' may be connected to said base structure 1010 by means of a common rotatable coupling system with a horizontal stop point. The upper part of said base structure 101 serves as a cooktop 106 i.e. the horizontal surface constituted by a plurality of bricks 108 and by respective metal profiles 107 that form the carrying structure thereof. In an alternative version, the cooktop 106 may also be constituted by a single brick with dimensions corresponding to the dimensions of the cooktop and by a support metal sheet. The two lateral surfaces or raised edges characterising said cooktop 106 are obtained using the same technique as the bricks 108 and metal profiles 107. More in detail, said metal profiles 107 are preferably but not exclusively C-shaped, so that two consecutive profiles form a housing seat suitably dimensioned for the introduction of at least one brick 108 without requiring masonry works or the like. Even more in detail, said bricks 108 are rectangular and made of any refractory material which, as known, confer a smoky after-taste to the grilled dishes. As observable in FIG. 1, said lateral surfaces are reversibly engaged with at least one movable grill 109, preferably two movable grills 109 so as to enable cooking different dishes without the flavours mixing. A spit or roasting-jack may also be provided alongside the grill 100 subject of the invention so as to enable preparing brochettes or the like applying the same mode of coupling to the lateral surfaces of the cooktop 106. More specifically, said lateral surfaces of the cooktop 106 can be suitably configured to hold the movable grill 109 and possible additional grills or spits, at a distance from the embers comprised between 5 cm and 30 cm, preferably 10 cm. In addition, said movable grills 109 are laterally provided with at least one pair of handles 500-500' which make it particularly easy to handle for positioning on the charcoal and also possibly for serving.

The brazier-oven 110 integrated in the grill 100 is the volume that is shown in FIG. 1 arranged at the rear surface of the cooktop 106. This is a cubic or preferably parallelepiped-shaped volume obtained using the same construction technique as the cooktop 106 described above. Said brazier-oven 110 is made up of lateral surfaces constituted by a plurality of metal profiles 111, preferably but not exclusively C-shaped, suitable to be reversibly engaged with a plurality of rectangular bricks 112 made of any refractory material, preferably the same type of bricks as the ones mentioned in the description of the cooktop 106. The lower surface is constituted by a fixed grill 113 and the upper surface can be reversibly closed using a common lid 116 provided with a handle 117. The operation of said brazier-oven 110 provides for that the user arranges on said fixed grill 113 the wood which, after a few minutes, starts dropping the embers on the cooktop 106, thus initiating the grilling. In addition, during the formation of the embers, the movable grill 109 or movable grills can be preferably provided for instead of the lid 116 of the brazier-oven 110. Thus, the movable grill 109 will be sufficiently disinfected by the action of the fire. After cooking using the grill 109, the embers will be accumulated beneath said brazier-oven 110, once again at the lower surface thereof while waiting for the dishes previously arranged on at least one internal tray 114 to cook. As observable in the exploded view of FIG. 2, inside the volume of the brazier-oven 110, there can be actually arranged internal trays 114, each one of which is provided with a relative handle 115 to enable removal and positioning. One of the most uncomfortable aspects faced by the guest preparing the grilled food-stuffs actually lies in the fact that he/she cannot move away from the grill before all dishes are ready. Thanks to the grill 100 subject of the present patent instead, once through with grilling the other dishes (such as bread, pizza, chicken, roast meat, water to be boiled for making pasta, etc.) can be left to cook thanks to the trays 114 inside the brazier-oven 110. The user accumulates the embers beneath the volume of the brazier-oven 110, previously loaded with the trays 114 filled with the food to be cooked, and is free to sit at the table with the rest and enjoy the grill while the other food-stuffs cook without requiring supervision. In addition, in a preferred version of the present invention, said brazier-oven 110 may be provided with a thermometer arranged at any easily visible position, such as for example the front surface of the brazier-oven 110, so as to monitor the cooking temperature. Furthermore, said lid 116 can be made of ceramic glass which would enable monitoring the cooking without opening the oven, thus causing the release of heat.

Said brazier-oven 110 is reversibly connected to said cooktop 106 thus enabling the installation thereof at any cooktop, even one different from the one of the present invention. Furthermore, said brazier-oven 110 may also be of the openable type. With reference to FIG. 4, the lateral surfaces of said brazier-oven 110 may actually be provided with special hinges 121 which enable to open the brazier-oven 110 and transform it from a three-dimensional to a two-dimensional element upon removing the lid 116. One of the applications of the brazier-oven 110 in this configuration could be, by way of non-limiting example, the covering of the inner surface of a chimney or any other surface exposed to flames.

This does not rule out the possibility of obtaining the grill 100 as a single piece with the metal parts reversibly fixed to each other by welding for example.

One of the most versatile embodiments of the grill 100 of the present invention provides for the possibility of modulating the dimensions thereof for example depending on the number of guests. In particular, the crosspieces 103 and the metal profiles 107 that constitute the cooktop 106, are of the telescopic type so as to enable the extension of said cooktop 106 in at least one direction. In addition, the metal profiles 111 of the brazier-oven 110 are reversibly engaged with each other by means of a common fitting system or by means of common mechanical means such as screws, pins or the like, in a manner such that by adding further compatible metal profiles 111 or removing some of the present metal profiles 111, the user can reversibly modify at least one dimension of the brazier-oven 110.

This enables efficiently overcoming the problem related to the fixed dimensions of the grill. The one subject of the invention can actually be extended or widened by simply acquiring new metal profiles 107-111 and bricks 108-112 of the same dimensions and characteristics as the already available ones. Removing them enables returning to the initial or smaller dimensions.

Numerous further additional components are suitable to facilitate the work of the person cooking. These components for example include an accessory plane 118 that can be reversibly engaged with at least one raised lateral surface of the cooktop 106 projecting externally, a slidable plane 130 suitable to reversibly slide horizontally along the direction of the arrow 300 (FIG. 3) in order to transfer the entire embers present on the cooktop 106 at the lower part of the brazier-oven 110, a closing element 120 slidably connected to at least one lateral surface of the brazier-oven 110 which slides vertically and reversibly along a direction of the arrow 200 (FIG. 3) in order to hold the embers at the lower part of the brazier-oven 110, an electric plate for cooking some dishes not suitable to be grilled, a wood-holder drawer. Said slidable plane 120 also serves to prevent or limit the dispersal of ash during and after cooking.

With reference to FIG. 3, an embodiment is illustrated that is also provided with a rotatable structure 122 suitable to light the grill 100, thus making it particularly usable even at night. This version requires to be power-supplied by a battery or a common electrical plug 124, maybe provided with a cable winder. The operation of the rotatable structure 122 depends on the positioning of the structure with respect to the grill 100. More specifically, said rotatable structure 122 is rotatably reversibly connected at least to the two rear uprights 102 by means of a pair of hinges 126. It is suitable to shift from a first configuration in which the two vertical rods it is made up of are at contact with the two rear uprights 102, to a second configuration in which - rotating around the hinges 126 - the rotatable structure 122 reaches vertical stop point in which the two vertical rods it is made up of are arranged along the same directrix as said rear uprights 102. The light 123 (or plurality of lights) that the horizontal rod of the rotatable structure 122 is provided with is suitable to automatically light up when the rotatable structure 122 takes the second configuration.

One of the most distinctive innovative traits lies in the mode of assembling the bricks 108-112 with respect to the respective metal profiles 107-111. Given that said seats are formed by two consecutive metal profiles 107-111 specifically dimensioned for the format of the bricks 108-112 provided alongside the grill 100, there is no need for an adhesive element, masonry works or holding said bricks 108-112, and it is sufficient that they be inserted into the designated seat, thus accelerating assembly, disassembly and replacement of any brick 108-111. It is also preferable that all bricks 108-112 be of the same identical format, so as not to confuse the user when assembling.

The advantages of the present invention are clear in light of the description above, particularly as concerns the versatility and safety of the grill 100 subject of the invention. In particular, it does not rust as it instead occurs with the grills currently available in the market and it is such to reduce the generation of sparks. In addition, the use of refractory material guarantees uniform spread of heat, thus avoiding the overheating of some parts and harmonising the cooking.

Lastly, it is clear that the invention described up to now may be subjected to modifications, additions or variants obvious to a man skilled in the art, without departing from the scope of protection outlined by the attached claims.

## Claims

1. Modular grill (100) with integrated brazier-oven (110), wherein it is constituted by:
A) a base structure (101) with rectangular or square base, constituted by at least four uprights (102) arranged at the corners of the base rectangle and at least four crosspieces (103) adapted to horizontally connect said uprights (102); at least the two rear uprights (102) being provided, at the lower end, with at least one pair of wheels (104) and at least the two front uprights (102) being provided, at the upper end, with at least one pair of handles (105) suitable to allow the partial lifting of the front portion of the grill (100); the upper portion of said base structure (101) being suitable to act as a cooktop (106); said crosspieces (103) being suitable to be reversibly engaged with at least one lower support surface (131), said uprights (102) being possibly provided with at least one pair of tool-holder brackets (400-400');
B) a cooktop (106) constituted by a horizontal flat surface on which the user arranges the embers ready for cooking; said surface being constituted by a plurality of metal profiles (107) with shape and size such to stably retain, in a reversible manner, a plurality of rectangular bricks (108) made of any refractory material; said cooktop (106) also being constituted by at least two raised lateral surfaces suitable to be reversibly engaged with at least one movable grill (109), provided with at least one pair of handles (500-500'), at a distance from the cooktop comprised between 5 cm and 30 cm, preferably 10 cm;
C) a brazier-oven element (110), constituted by a substantially cube-shaped or parallelepiped-shaped structure arranged at the rear portion of the cooktop (106) of said grill (100); said brazier-oven (110) being provided with lateral surfaces constituted by a plurality of metal profiles (111) suitable to be reversibly engaged with a plurality of bricks (112) made of any refractory material, a lower surface constituted by a fixed grill (113) and an upper surface reversibly closable by means of a common lid (116), preferably made of ceramic glass, provided with a handle (117); said brazier-oven (110) being suitable to contain at least one reversibly extractable internal tray (114), it too provided with a handle (115); said brazier-oven (110) being **characterised in that** it is reversibly connected to said cooktop (106) of said base structure (101).

2. Modular grill (100) with integrated brazier-oven (110), according to claim 1, **characterised in that** said bricks (108, 112) are simply inserted into the seat formed by two consecutive metal profiles (107, 111), preferably C-shaped, in a manner such that the replacement of any broken or damaged brick (108, 111) or the disassembly or remounting of the entire grill (100) are simple, reversible and quick operations.

3. Modular grill (100) with integrated brazier-oven (110), according to any one of the preceding claims, **characterised in that** it is provided with a plurality of movable grids (109) suitable to allow the cooking of different dishes, preventing the mixing of flavours.

4. Modular grill (100) with integrated brazier-oven (110), according to any one of the preceding claims, **characterized in that** it is provided with at least one skewer and/or a spit adapted to be reversibly engaged with the raised lateral surfaces of the cooktop (106) in order to allow the cooking of skewered meat or the like.

5. Modular grill (100) with integrated brazier-oven (110), according to any one of the preceding claims, **characterised in that** said brazier-oven (110) is provided with at least three hinges (121) arranged between the metal profiles (111) at at least three vertical edges, in a manner such that, once the lid (116) is removed, said brazier-oven (110) can be reversibly opened so as to serve the purpose of covering any vertical surface exposed to a open flame, such as the inner surface of a chimney.

6. Modular grill (100) with integrated brazier-oven (110), according to any one of the preceding claims, **characterised in that** said crosspieces (103) and the metal profiles (107) which constitute the cooktop (106) are of telescopic type in order to allow the extension of said cooktop (106) in at least one direction.

7. Modular grill (100) with integrated brazier-oven (110), according to the preceding claim 6, **characterised in that** said metal profiles (111) of said brazier-oven (110) are reversibly engaged with each other by means of a common fitting system or by means of common mechanical means such as screws, pins or the like, in a manner such that by adding further metal profiles (111), provided with the same reversible coupling system, or by removing some metal profiles (111), the user can reversibly modify at least one dimension of said brazier-oven (110).

8. Modular grill (100) with integrated brazier-oven (110), according to any one of the preceding claims, **characterised in that** it is provided with at least one accessory surface (118) adapted to be reversibly coupled to at least one raised lateral surface of said cooktop (106), projecting externally with respect to said cooktop (106); said accessory surface preferably being constituted by at least one pair of metal profiles (107) suitable to be reversibly engaged with at least one brick (108) and being adapted to allow the stable support of utensils, condiments or other.

9. Modular grill (100) with integrated brazier-oven (110), according to any one of the preceding claims, **characterised in that** it is provided with at least one slidable surface (130) adapted to reversibly slide horizontally along the direction of the arrow (300) in order to move all the charcoal or wood present cooktop (106) at the lower part of the brazier-oven (110) and in order to limit the dispersal of ash.

10. Modular grill (100) with integrated brazier-oven (110), according to any one of the preceding claims, **characterised in that** it is provided with at least one closure element (120) slidably connected to at least one lateral surface of said brazier-oven (110), adapted to vertically and reversibly slide along one direction of the arrow (200) in order to retain the charcoal or wood at the lower part of said brazier-oven (110).

11. Modular grill (100) with integrated brazier-oven (110), according to any one of the preceding claims, **characterised in that** it is provided with a rotatable structure (122) connected in a reversibly rotatable manner at least to the two rear uprights (102) of said base structure (101) by means of a pair of hinges (126); said rotatable structure (122) being adapted to pass from a first configuration in which the two vertical rods it is made up of are at contact with the two rear uprights (102) of said base structure (101) to a second configuration in which said rotatable structure (122), rotating around said hinges (126), is brought to a vertical stop point in which the two vertical rods it is made up of are arranged along the same directrix as said rear uprights (102); said rotatable structure (122) being provided with at least one light (123) suitable to automatically light up when said rotatable structure (122) assumes said second configuration; said at least one light (123) being power supplied by means of a common battery or connected to the power mains by means of a common plug (124).

12. Modular grill (100) with integrated brazier-oven (110), according to any one of the preceding claims, **characterised in that** it is provided with at least one thermal-insulation container (128), preferably placed on said lower support surface (131) and possibly also with a wood-holder case.

13. Modular grill (100) with integrated brazier-oven (110), according to the preceding claim 11, **characterised in that** it is provided with at least one electric plate suitable to cook foods.

14. Modular grill (100) with integrated brazier-oven (110), according to any one of the preceding claims, **characterised in that** the flame comes from a common gas stove supplied by a common gas cylinder (129).

15. Modular grill (100) with integrated brazier-oven (110), according to any one of the preceding claims, **characterised in that** said brazier-oven (110) is provided, on at least one lateral surface, with a common thermometer visible from the external.

16. Modular grill (100) with integrated brazier-oven (110), according to any one of the preceding claims, **characterised in that** said base structure (101) is connected to at least one pair of lateral boards (600-600'), one to the right and one to the left of said cooktop (106), by means of a common rotatable and reversible connection system with horizontal stop point.

17. Modular grill (100) with integrated brazier-oven (110), according to any one of the preceding claims, **characterised in that** said base structure (101) and said brazier-oven element (110) are stably and irreversibly connected to each other.

## Patentansprüche

1. Modularer Grill (100) mit integriertem Kohlenpfannenofen (110), wobei gebildet ist durch:
A) eine Basisstruktur (101) mit rechteckiger oder quadratischer Basis, die aus mindestens vier an den Ecken des Basisrechtecks angeordneten Pfosten (102) und mindestens vier Querstreben (103), die dazu ausgebildet sind, die Pfosten (102) horizontal zu verbinden, gebildet ist; wobei mindestens die beiden hinteren Pfosten (102) am unteren Ende mit mindestens einem Paar von Rädern (104) versehen sind und mindestens die beiden vorderen Pfosten (102) am oberen Ende mit mindestens einem Paar von Griffen (105) versehen sind, die geeignet sind, das teilweise Anheben des vorderen Teils des Grills (100) zu ermöglichen; wobei der obere Teil der Basisstruktur (101) dazu geeignet ist, als Kochfeld (106) zu wirken; wobei die Querstreben (103) dazu geeignet sind, reversibel mit mindestens einer unteren Auflagefläche (131) in Eingriff gebracht zu werden, wobei die Pfosten (102) möglicherweise mit mindestens einem Paar von Werkzeughalterklammern (400-400') versehen sind;
B) ein Kochfeld (106), das durch eine horizontale, flache Oberfläche gebildet ist, auf der der Benutzer die glühende Kohle zum Garen anordnet; wobei die Oberfläche aus einer Mehrzahl von Metallprofilen (107) mit einer Form und Größe derart, dass sie eine Mehrzahl von rechteckigen Steinen (108) aus einem beliebigen feuerfesten Material stabil und reversibel halten, gebildet ist; wobei das Kochfeld (106) auch durch mindestens zwei erhabene laterale Flächen gebildet ist, die geeignet sind, mit mindestens einem beweglichen Rost (109), der mit mindestens einem Paar Griffen (500-500') versehen ist, in einem Abstand von dem Kochfeld zwischen 5 cm und 30 cm, vorzugsweise 10 cm, reversibel in Eingriff gebracht zu werden;
C) ein Kohlenpfannenofenelement (110), das durch eine im wesentlichen kubusförmige oder parallelepipedförmige Struktur gebildet ist, die an dem hinteren Teil des Kochfelds (106) des Grills (100) angeordnet ist; wobei der Kohlenpfannenofen (110) mit lateralen Flächen, die durch eine Mehrzahl von Metallprofilen (111) gebildet werden, die geeignet sind, reversibel mit einer Mehrzahl von Steinen (112) aus einem beliebigen feuerfesten Material in Eingriff gebracht zu werden, einer unteren Fläche, die durch einen festen Rost (113) gebildet wird, und einer oberen Fläche, die reversibel mit Hilfe eines gewöhnlichen Deckels (116), vorzugsweise aus Keramikglas und mit einem Griff (117) versehen, verschließbar ist, versehen ist; wobei der Kohlenpfannenofen (110) geeignet ist, mindestens eine reversibel ausziehbare innere Ablage (114) zu enthalten, die ebenfalls mit einem Griff (115) versehen ist; wobei der Kohlenpfannenofen (110) **dadurch gekennzeichnet ist, dass** er mit dem Kochfeld (106) der Basisstruktur (101) reversibel verbunden ist.

2. Modularer Grill (100) mit integriertem Kohlenpfannenofen (110) gemäß Anspruch 1, **dadurch gekennzeichnet, dass** die Steine (108, 112) einfach in den Sitz, der durch zwei aufeinanderfolgende, vorzugsweise C-förmige Metallprofile (107, 111) gebildet wird, so eingesetzt werden, dass der Austausch eines beliebigen gebrochenen oder beschädigten Steins (108, 111) oder die Demontage oder Wiedermontage des gesamten Grills (100) einfache, reversible und schnelle Vorgänge sind.

3. Modularer Grill (100) mit integriertem Kohlenpfannenofen (110) gemäß einem der vorangehenden Ansprüche, **dadurch gekennzeichnet, dass** er mit einer Mehrzahl von beweglichen Gittern (109) versehen ist, die geeignet sind, das Garen verschiedener Gerichte zu ermöglichen und das Vermischen von Aromen zu verhindern.

4. Modularer Grill (100) mit integriertem Kohlenpfannenofen (110) gemäß einem der vorangehenden Ansprüche, **dadurch gekennzeichnet, dass** er mit mindestens einem Spieß und/oder einem Drehspieß versehen ist, der dazu angepasst ist, reversibel mit den erhabenen lateralen Flächen des Kochfelds (106) in Eingriff gebracht zu werden, um das Garen von Fleischspießen oder dergleichen zu ermöglichen.

5. Modularer Grill (100) mit integriertem Kohlenpfannenofen (110) gemäß einem der vorangehenden Ansprüche, **dadurch gekennzeichnet, dass** der Kohlenpfannenofen (110) mit mindestens drei Scharnieren (121) versehen ist, die an mindestens drei vertikalen Rändern derart zwischen den Metallprofilen (111) angeordnet sind, dass der Kohlenpfannenofen (110), sobald der Deckel (116) entfernt ist, reversibel geöffnet werden kann, um den Zweck zu erfüllen, jede vertikale Fläche, die einer offenen Flamme ausgesetzt ist, wie beispielsweise die Innenfläche eines Kamins, abzudecken.

6. Modularer Grill (100) mit integriertem Kohlenpfannenofen (110) gemäß einem der vorangehenden Ansprüche, **dadurch gekennzeichnet, dass** die Querstreben (103) und die Metallprofile (107), die das Kochfeld (106) bilden, teleskopartig sind, um die Verlängerung des Kochfelds (106) in mindestens einer Richtung zu ermöglichen.

7. Modularer Grill (100) mit integriertem Kohlenpfannenofen (110) gemäß dem vorangehenden Anspruch 6, **dadurch gekennzeichnet, dass** die Metallprofile (111) des Kohlenpfannenofens (110) mittels eines gewöhnlichen Montagesystems oder mittels gewöhnlicher mechanischer Mittel wie Schrauben, Stifte oder dergleichen reversibel miteinander in Eingriff stehen, so dass der Benutzer durch Hinzufügen weiterer Metallprofile (111), die mit demselben reversiblen Kopplungssystem versehen sind, oder durch Entfernen einiger Metallprofile (111) mindestens eine Abmessung des Kohlenpfannenofens (110) reversibel verändern kann.

8. Modularer Grill (100) mit integriertem Kohlenpfannenofen (110) gemäß einem der vorangehenden Ansprüche, **dadurch gekennzeichnet, dass** er mit mindestens einer Zubehörfläche (118) versehen ist, die dazu angepasst ist, reversibel an mindestens eine erhabene laterale Fläche des Kochfeldes (106), die in Bezug auf das Kochfeld (106) nach außen vorsteht, gekoppelt zu werden; wobei die Zubehörfläche vorzugsweise durch mindestens ein Paar Metallprofile (107) gebildet ist, die dazu geeignet sind, reversibel mit mindestens einem Stein (108) in Eingriff gebracht zu werden und die dazu angepasst sind, das stabile Tragen von Utensilien, Gewürzen oder anderem zu ermöglichen.

9. Modularer Grill (100) mit integriertem Kohlenpfannenofen (110) gemäß einem der vorangehenden Ansprüche, **dadurch gekennzeichnet, dass** er mit mindestens einer verschiebbaren Fläche (130) versehen ist, die dazu angepasst ist, horizontal entlang der Richtung des Pfeils (300) reversibel zu gleiten, um die/das gesamte auf dem Kochfeld (106) befindliche Holzkohle oder Holz an den unteren Teil des Kohlenpfannenofens (110) zu bewegen und um die Verbreitung von Asche zu begrenzen.

10. Modularer Grill (100) mit integriertem Kohlenpfannenofen (110) gemäß einem der vorangehenden Ansprüche, **dadurch gekennzeichnet, dass** er mit mindestens einem Verschlusselement (120) versehen ist, das verschiebbar mit mindestens einer lateralen Fläche des Kohlenpfannenofen (110) verbunden ist und dazu angepasst ist, vertikal und reversibel entlang einer Richtung des Pfeils (200) zu gleiten, um die Holzkohle oder das Holz im unteren Teil des Kohlenpfannenofens (110) zu halten.

11. Modularer Grill (100) mit integriertem Kohlenpfannenofen (110) gemäß einem der vorangehenden Ansprüche, **dadurch gekennzeichnet, dass** er mit einer drehbaren Struktur (122) versehen ist, die mittels eines Paares von Scharnieren (126) in einer reversibel drehbaren Weise mindestens mit den beiden hinteren Pfosten (102) der Basisstruktur (101) verbunden ist; wobei die drehbare Struktur (122) dazu angepasst ist, von einer ersten Konfiguration, in der die beiden vertikalen Stäbe, aus denen sie besteht, mit den beiden hinteren Pfosten (102) der Basisstruktur (101) in Kontakt stehen, in eine zweite Konfiguration überzugehen, in der die drehbare Struktur (122), die sich um die Scharniere (126) dreht, zu einem vertikalen Anschlagpunkt gebracht wird, in dem die beiden vertikalen Stäbe, aus denen sie besteht, entlang derselben Leitlinie wie die hinteren Pfosten (102) angeordnet sind; wobei die drehbare Struktur (122) mit mindestens einer Leuchte (123) versehen ist, die geeignet ist, automatisch zu leuchten, wenn die drehbare Struktur (122) die zweite Konfiguration annimmt; wobei die mindestens eine Leuchte (123) mittels einer gewöhnlichen Batterie mit Leistung versorgt wird oder mittels eines gewöhnlichen Steckers (124) an das Stromnetz angeschlossen wird.

12. Modularer Grill (100) mit integriertem Kohlenpfannenofen (110) gemäß einem der vorangehenden Ansprüche, **dadurch gekennzeichnet, dass** er mit mindestens einem Wärmeisolierungsbehälter (128), der vorzugsweise auf der unteren Auflagefläche (131) angeordnet ist, und möglicherweise auch mit einem Holzhaltergehäuse versehen ist.

13. Modularer Grill (100) mit integriertem Kohlenpfannenofen (110) gemäß dem vorangehenden Anspruch 11, **dadurch gekennzeichnet, dass** er mit mindestens einer elektrischen Platte, die zum Kochen von Lebensmitteln geeignet ist, versehen ist.

14. Modularer Grill (100) mit integriertem Kohlenpfannenofen (110) gemäß einem der vorangehenden Ansprüche, **dadurch gekennzeichnet, dass** die Flamme von einem gewöhnlichen Gasherd kommt, der von einer gewöhnlichen Gasflasche (129) gespeist wird.

15. Modularer Grill (100) mit integriertem Kohlenpfannenofen (110) gemäß einem der vorangehenden Ansprüche, **dadurch gekennzeichnet, dass** der Kohlenpfannenofen (110) auf mindestens einer lateralen Fläche mit einem gewöhnlichen, von außen sichtbaren Thermometer versehen ist.

16. Modularer Grill (100) mit integriertem Kohlenpfannenofen (110) gemäß einem der vorangehenden Ansprüche, **dadurch gekennzeichnet, dass** die Basisstruktur (101) mit mindestens einem Paar lateraler Platten (600-600'), eine rechts und eine links des Kochfelds (106), mittels eines gewöhnlichen drehbaren und reversiblen Verbindungssystems mit horizontalem Anschlag verbunden ist.

17. Modularer Grill (100) mit integriertem Kohlenpfannenofen (110) gemäß einem der vorangehenden Ansprüche, **dadurch gekennzeichnet, dass** die Basisstruktur (101) und das Kohlenpfannenofenelement (110) stabil und irreversibel miteinander verbunden sind.

## Revendications

1. Gril modulaire (100) à four brasero intégré (110), dans lequel il est constitué par :
A) une structure de base (101) avec une base rectangulaire ou carrée, constituée par au moins quatre montants (102) agencés à des coins du rectangle de base et au moins quatre traverses (103) adaptées pour raccorder horizontalement lesdits montants (102) ; au moins les deux montants arrière (102) étant dotés, à l'extrémité inférieure, d'au moins une paire de roues (104) et au moins les deux montants avant (102) étant dotés, à l'extrémité supérieure, d'au moins une paire de poignées (105) adaptées pour permettre le levage partiel de la portion avant du gril (100) ; la portion supérieure de ladite structure de base (101) étant adaptée pour agir comme plaque de cuisson (106) ; lesdites traverses (103) étant adaptées pour être mises en prise de manière réversible avec au moins une surface de support inférieure (131), lesdits montants (102) étant éventuellement dotés d'au moins une paire de supports de porte-outils (400-400') ;
B) une plaque de cuisson (106) constituée par une surface plate horizontale sur laquelle l'utilisateur dispose les braises prêtes pour cuire ; ladite surface étant constituée par une pluralité de profilés métalliques (107) avec une forme et taille telles qu'ils retiennent de manière stable, de manière réversible, une pluralité de briques rectangulaires (108) réalisées en n'importe quel matériau réfractaire ; ladite plaque de cuisson (106) étant aussi constituée par au moins deux surfaces latérales relevées adaptées pour être mises en prise de manière réversible avec au moins un gril mobile (109), dotées d'au moins une paire de poignées (500-500'), à une distance de la plaque de cuisson comprise entre 5 cm et 30 cm, de préférence de 10 cm ;
C) un élément de four brasero (110), constitué par une structure sensiblement en forme de cube ou en forme de parallélépipède agencée à la portion arrière de la plaque de cuisson (106) dudit gril (100) ; ledit four brasero (110) étant doté de surfaces latérales constituées par une pluralité de profilés métalliques (111) adaptés pour être mis en prise de manière réversible avec une pluralité de briques (112) réalisées en n'importe quel matériau réfractaire, une surface inférieure constituée par un gril fixe (113) et une surface supérieure fermable de manière réversible au moyen d'un couvercle commun (116), de préférence réalisé en verre céramique, doté d'une poignée (117) ; ledit four brasero (110) étant adapté pour contenir au moins un plateau interne extractible de manière réversible (114), lui aussi doté d'une poignée (115) ; ledit four brasero (110) étant **caractérisé en ce qu'**il est raccordé de manière réversible à ladite plaque de cuisson (106) de ladite structure de base (101).

2. Gril modulaire (100) à four brasero intégré (110) selon la revendication 1, **caractérisé en ce que** lesdites briques (108, 112) sont simplement insérées dans le siège formé par deux profilés métalliques consécutifs (107, 111), de préférence en forme de C, d'une manière telle que le remplacement de toute brique cassée ou endommagée (108, 111) ou le désassemblage ou le remontage du gril entier (100) soient des opérations simples, réversibles et rapides.

3. Gril modulaire (100) à four brasero intégré (110), selon l'une quelconque des revendications précédentes, **caractérisé en ce qu'**il est doté d'une pluralité de grilles mobiles (109) adaptées pour permettre la cuisson de différents plats, empêchant le mélange de saveurs.

4. Gril modulaire (100) à four brasero intégré (110) selon l'une quelconque des revendications précédentes, **caractérisé en ce qu'**il est doté d'au moins une brochette et/ou une broche adaptée pour être mise en prise de manière réversible avec les surfaces latérales relevées de la plaque de cuisson (106) afin de permettre la cuisson de viande embrochée ou similaire.

5. Gril modulaire (100) à four brasero intégré (110) selon l'une quelconque des revendications précédentes, **caractérisé en ce que** ledit four brasero (110) est doté d'au moins trois articulations (121) agencées entre les profilés métalliques (111) à au moins trois arêtes verticales d'une manière telle qu'une fois le couvercle (116) retiré, ledit four brasero (110) puisse être ouvert de manière réversible de sorte à servir de couverture de toute surface verticale exposée à une flamme ouverte, telle que la surface intérieure d'une cheminée.

6. Gril modulaire (100) à four brasero intégré (110) selon l'une quelconque des revendications précédentes, **caractérisé en ce que** lesdites traverses (103) et les profilés métalliques (107) qui constituent la plaque de cuisson (106) sont de type télescopique afin de permettre l'extension de ladite plaque de cuisson (106) dans au moins une direction.

7. Gril modulaire (100) à four brasero intégré (110) selon la revendication précédente 6, **caractérisé en ce que** lesdits profilés métalliques (111) dudit four brasero (110) sont mis en prise de manière réversible l'un avec l'autre au moyen d'un système d'adaptation commun ou au moyen de moyens mécaniques communs tels que des vis, broches ou similaire, d'une manière telle que par l'ajout d'autres profilés métalliques (111), dotés du même système de couplage réversible, ou par le retrait de certains profilés métalliques (111), l'utilisateur puisse modifier de manière réversible au moins une dimension dudit four brasero (110).

8. Gril modulaire (100) à four brasero intégré (110) selon l'une quelconque des revendications précédentes, **caractérisé en ce qu'**il est doté d'au moins une surface accessoire (118) adaptée pour être couplée de manière réversible à au moins une surface latérale relevée de ladite plaque de cuisson (106), faisant saillie en externe par rapport à ladite plaque de cuisson (106) ; ladite surface accessoire étant de préférence constituée par au moins une paire de profilés métalliques (107) adaptés pour être mis en prise de manière réversible avec au moins une brique (108) et étant adaptés pour permettre le support stable d'ustensiles, condiments ou autres.

9. Gril modulaire (100) à four brasero intégré (110) selon l'une quelconque des revendications précédentes, **caractérisé en ce qu'**il est doté d'au moins une surface coulissante (130) adaptée pour coulisser de manière réversible horizontalement le long de la direction de la flèche (300) afin de déplacer tout le charbon ou le bois présent sur la plaque de cuisson (106) à la partie inférieure du four brasero (110) et afin de limiter la dispersion de cendres.

10. Gril modulaire (100) à four brasero intégré (110) selon l'une quelconque des revendications précédentes, **caractérisé en ce qu'**elle est dotée d'au moins un élément de fermeture (120) raccordé de manière coulissante à au moins une surface latérale dudit four brasero (110), adapté pour coulisser verticalement et de manière réversible le long d'une direction de la flèche (200) afin de retenir le charbon ou le bois sur la partie inférieure dudit four brasero (110).

11. Gril modulaire (100) à four brasero intégré (110) selon l'une quelconque des revendications précédentes, **caractérisé en ce qu'**il est doté d'une structure rotative (122) raccordée d'une manière rotative et réversible au moins aux deux montants arrière (102) de ladite structure de base (101) au moyen d'une paire d'articulations (126) ; ladite structure rotative (122) étant adaptée pour passer d'une première configuration dans laquelle les deux barres verticales dont elle est fabriquée, sont en contact avec les deux montants arrière (102) de ladite structure de base (101) à une seconde configuration dans laquelle ladite structure rotative (122), tournant autour desdites articulations (126), est amenée à un point d'arrêt vertical dans lequel les deux barres verticales dont elle est fabriquée sont agencées le long de la même directrice que lesdits montants arrière (102) ; ladite structure rotative (122) étant dotée d'au moins une lumière (123) adaptée pour s'allumer automatiquement lorsque ladite structure rotative (122) adopte ladite seconde configuration ; ladite au moins une lumière (123) étant alimentée au moyen d'une batterie commune ou raccordée au secteur au moyen d'une prise commune (124).

12. Gril modulaire (100) à four brasero intégré (110) selon l'une quelconque des revendications précédentes, **caractérisé en ce qu'**il est doté d'au moins un contenant d'isolation thermique (128), de préférence placé sur ladite surface de support inférieure (131) et éventuellement aussi avec une caisse porte-bois.

13. Gril modulaire (100) à four brasero intégré (110) selon la revendication précédente 11, **caractérisé en ce qu'**il est doté d'au moins une plaque électrique adaptée pour cuire des aliments.

14. Gril modulaire (100) à four brasero intégré (110) selon l'une quelconque des revendications précédentes, **caractérisé en ce que** la flamme vient d'une cuisinière à gaz commune alimentée par une bouteille de gaz commune (129).

15. Gril modulaire (100) à four brasero intégré (110) selon l'une quelconque des revendications précédentes, **caractérisé en ce que** ledit four brasero (110) est doté, sur au moins une surface latérale, d'un thermomètre commun visible de l'extérieur.

16. Gril modulaire (100) à four brasero intégré (110) selon l'une quelconque des revendications précédentes, **caractérisé en ce que** ladite structure de base (101) est raccordée à au moins une paire de planches latérales (600-600'), une sur la droite et une sur la gauche de ladite plaque de cuisson (106), au moyen d'un système de raccordement réversible et rotatif commun avec le point d'arrêt horizontal.

17. Gril modulaire (100) à four brasero intégré (110) selon l'une quelconque des revendications précédentes, **caractérisé en ce que** ladite structure de base (101) et ledit élément de four brasero (110) sont raccordés l'un à l'autre de manière stable et irréversible.
